# EUROPEAN PATENT APPLICATION

(11) **EP 2 511 578 A1**
(43) Date of publication of application: **17.10.2012**
(21) Application number: 10835905.0
(22) Date of filing: 03.12.2010
(51) Int. Cl.: F16J 15/18, F03D 11/02

(54) **SEAL STRUCTURE OF MECHANICAL DEVICE, AND WIND POWER GENERATOR**

(30) Priority: 07.12.2009 JP 2009278022
(71) Applicant: Mitsubishi Heavy Industries, Ltd., Tokyo 108-8215 (JP)
(72) Inventor: TAKEUCHI, Hiroaki, Tokyo 108-8215 (JP); HOTTA, Kazuro, Tokyo 108-8215 (JP); OKADA, Kozue, Tokyo 108-8215 (JP); NISHIDA, Hideaki, Tokyo 108-8215 (JP)
(74) Representative: Intès, Didier Gérard André
(86) International application number: PCT/JP2010/071741
(87) International publication number: WO 2011/070984

(57) **Abstract**

It is intended to improve maintainability of a seal structure in a place where the rotation shaft is inserted in the housing. A seal structure of a mechanical device is provided with a housing 18 having an opening in which an input shaft 21 is inserted, a holding plate 41 which is connected to a periphery of the opening of the housing 18 and which has an opening in which the input shaft 21 is inserted, a felt ring 46 which is provided in the holding plate 41 and which seals a space between the holding plate 41 and the input shaft 21, a separable housing 43 which is provided to cover the holding plate 41 and a separable oil seal 45 which seals the space between the holding plate 41 and the input shaft 21 and a space between the cover and the rotation shaft. The holding plate 41 has an arc-shaped projection 47b extending to a position where the projection comes in contact with a wall surface of the separable housing 43 and a housing space for housing the oil seal 45 is formed by the wall surface of the cover, the inner periphery of the arc-shaped projection 47b and the wall surface of the holding plate 41.

## Description

### Technical Field

The present invention relates to a seal structure of a mechanical device, and in particular to a seal structure which prevents leaking of lubricant oil where a rotation shaft is inserted in a housing.

### Background Art

It is necessary to supply lubricant oil to all parts in order for a mechanical device such as a step-up gear and a reduction gear to function. The mechanical device is constituted of gears and other mechanical components. A bath lubrication system is the most commonly used system for supplying the lubricant oil to the required parts of the mechanical device. In the bath lubrication system, the lubricant oil adheres to the gear by dipping at least a part of the gear in a bath of the lubricant oil or the lubricant oil adhered to the gear splashes so as to supply the lubricant oil to the required parts such as a gear surface and a bearing.

In the bath lubrication system, there is uncertainty in supply of the lubricant oil and a chance that the required parts are not supplied with sufficient amount of the lubricant oil. These issues were addressed in Patent Literature 1, JP2007-146666A. In Patent Literature 1, a method of spraying the lubricant oil to the required parts is proposed as another method of supplying the lubricant oil in a step-up gear of a wind turbine generator.

To increase the supply of the lubricant oil, it is desirable to adopt a forced lubrication system. When a sliding bearing is used to support a planetary gear in a planetary gear mechanism which is a step-up gear in a wind turbine generator, for instance, the lubricant oil is preferably supplied to the sliding bearing by the forced lubrication system.

In the forced lubrication system, leaking of the lubricant oil where the rotation shaft is inserted in the housing, may cause an issue. The lubricant oil is forced into the bearing at high pressure and thus, the lubricant oil is likely to leak. Therefore, it is important, in the forced lubrication system, to design a seal structure which prevents leaking of the lubricant oil. The seal structure herein refers to a seal and a structure supporting the seal. A commonly used seal structure is a flexible gasket (e.g. a felt ring) with lubricating property arranged between the rotation shaft and the housing. This type of seal structure does not have enough sealing capability.

When selecting a seal structure, not only the capability of preventing leaking of the lubricant oil but maintainability of the structure must be considered. Specifically, it is desirable to consider two factors described below when designing the seal structure. The first factor is a capability of preventing foreign objects from entering when replacing the seal. By allowing a part of the housing to be exposed when replacing the seal, there is a chance that foreign objects enter the housing, which can lead to a failure of the mechanical device. The second factor is a capability of reducing an operation space. Depending on a structure of the mechanical device, the operation space for mounting or removing the seal is limited. It is desirable to design the seal structure so that the seal can be mounted or removed even with limited space.

### [Citation List]

### [Patent Literature]

[Patent Literature 1]
   JP 2007-146666A

### Summary of Invention

### Technical Problem

It is an object of the present invention is to secure a sealing capability in a place where the rotation shaft is inserted in the housing and also to improve maintainability of the seal.

### Solution to Problem

In a first subject matter of the present invention, a seal structure of a mechanical device, may include, but is not limited to, a housing which has an opening in which a rotation shaft is inserted and in which lubricant oil is used; a holding plate which is connected to a periphery of the opening of the housing and which has an opening in which the rotation shaft is inserted; a first seal member which is provided in the holding plate and which seals a space between the holding plate and the rotation shaft; a cover which is provided to cover a periphery of at least a portion of the holding plate where the rotation shaft is inserted; and a second seal member which seals one of the space between the holding plate and the rotation shaft and a space between the cover and the rotation shaft.

In the seal structure, when replacing the second seal member, the opening where the rotation shaft is inserted is sealed by the first seal member and the holding plate. Thus, it is possible to change the second seal member without causing the leaking of the lubricant oil and further to prevent entry of foreign objects into the housing when replacing the second seal member. The first seal member may be a seal which has low sealing capability and which is inexpensive, such as a felt ring.

In the above seal structure of the mechanical device, the cover may be configured separable in a circumferential direction of the rotation shaft. This seal structure is effective in reducing the operation space in the case where other mechanical components and structural parts are arranged near the cover. In such case, the second seal member may be configured separable in a circumferential direction of the rotation shaft. The seal structure including a separable oil seal is disclosed in US Patent 5370401 as a split seal (registered trademark of John Crane Inc.) which is separable into two split halves.

Further in the above seal structure of the mechanical device, the holding plate may have a projection of arc-shape which extends to a position where the projection comes in contact with a wall surface of the cover, and a second-seal housing space for housing the second seal member may be formed by the wall surface of the cover, an inner periphery of the projection of the arc-shape and a wall surface of the holding plate.

In one embodiment, the above seal structure is provided with a communication path through which a space between the cover and the holding plate communicates with an inside of the housing. In another embodiment, the above seal structure is further provided with a pump which returns the lubricant oil stored in a space between the cover and the holding plate to the inside of the housing. In yet another embodiment, the above seal structure is provided with a tank; and a pipe through which a space between the cover and the holding plate communicates with the tank.

In the case where the second seal member seals the space between the holding plate and the rotation shaft, the above seal structure may be provided with a third seal member which is provided in the cover to seal a space between the cover and a rotation shaft.

In another subject matter of the present invention, a wind turbine generator may include, but is not limited to: a main shaft which supports a wind turbine rotor and is arranged rotatably; a step-up gear which has an input shaft and an output shaft, the input shaft having a hole in which the main shaft is inserted; a shrink disc which connects the input shaft and the main shaft together by tightening the input shaft; and a generator which is connected to the output shaft of the step-up gear. The step-up gear may be provided with a housing having an opening in which the input shaft is inserted and in which a lubricant oil is used; a holding plate which is connected to a periphery of the opening of the housing and which has an opening in which the input shaft is inserted; a first seal member which is provided in the holding plate and which seals a space between the holding plate and the input shaft; a cover which is provided to cover a periphery of at least a portion of the holding plate where the input shaft is inserted; and a second seal member which seals one of the space between the holding plate and the input shaft and a space between the cover and the input shaft.

In the case where the shrink disc is arranged such as to face the cover, the cover may be configured separable in a circumferential direction of the input shaft (in a radial direction). Further, the second seal member may be configured separable in the circumferential direction of the input shaft.

In an subject matter of the present invention, the step-up gear may include, but is not limited to: a seal structure for the lubricant oil which is arranged along the input shaft between: the housing having the opening in which the input shaft is inserted and in which the lubricant oil is used; and the shrink disc connecting the input shaft and the main shaft together by tightening the input shaft, and the seal structure may include, but is not limited to: the holding plate which is connected to the periphery of the opening of the housing and which has the opening in which the input shaft is inserted; the first seal member which is provided in the holding plate and which seals the space between the holding plate and the input shaft; the cover which is provided to cover the periphery of the at least portion of the holding plate where the input shaft is inserted; and the second seal member which seals one of the space between the holding plate and the input shaft and the space between the cover and the input shaft.

In such case, the holding plate may have a projection of arc-shape which extends to a position where the projection comes in contact with a wall surface of the cover, and a second-seal housing space for housing the second seal member may be formed by the wall surface of the cover, an inner periphery of the projection of the arc-shape and a wall surface of the holding plate.

According to the present invention, the maintainability of the seal structure is improved in the reason where the rotation shaft is inserted in the housing. Further, it is possible to obtain the seal structure of the mechanical device and the wind turbine generator, in particular, in which the seal structure can be arranged smoothly and freely-replaceable in a small space disposed between the shrink disk tightening and connecting the main shaft and the input shaft and a periphery of the housing of the step-up gear into which the lubricant oil is supplied. Furthermore, the second-seal housing space for housing the second seal member is formed by the inner wall surface of the cover, the inner periphery of the projection of the arc-shape and a wall surface of the holding plate. Therefore, the separated parts of second seal member can be easily placed in the seal housing space without falling while achieving easy alignment thereof.

### Brief Description of Drawings

[FIG.1] FIG.1 is a side view of a wind turbine generator in relation to a first embodiment of the present invention showing a structure thereof.
[FIG.2] FIG.2 is a top view of an inner structure of a wind turbine generator in relation to an embodiment.
[FIG.3] FIG.3 is a cross-sectional view of a structure of a step-up gear in relation to an embodiment.
[FIG.4] FIG.4 is a cross-sectional view of a seal structure of a step-up gear in relation to an embodiment.
[FIG.5] FIG.5 is a cross-sectional view of a seal structure of a step-up gear in relation to another embodiment.
[FIG.6] FIG.6 is a cross-sectional view of a seal structure of a step-up gear in relation to yet another embodiment.
[FIG.7] FIG.7 is a cross-sectional view of a seal structure of a step-up gear in relation to yet another embodiment.
[FIG.8] FIG.8 is a cross-sectional view of a seal structure of a step-up gear in relation to another embodiment, which corresponds to FIG.4.

### Description of Embodiments

An embodiment of the present invention will now be described in detail with reference to the accompanying drawings. Herein, an exemplary case where the present invention is applied to a step-up gear of a wind turbine generator. However, this is not limitative and the present invention can be applied, in general, to a variety of mechanical devices having a rotation shaft in a housing.

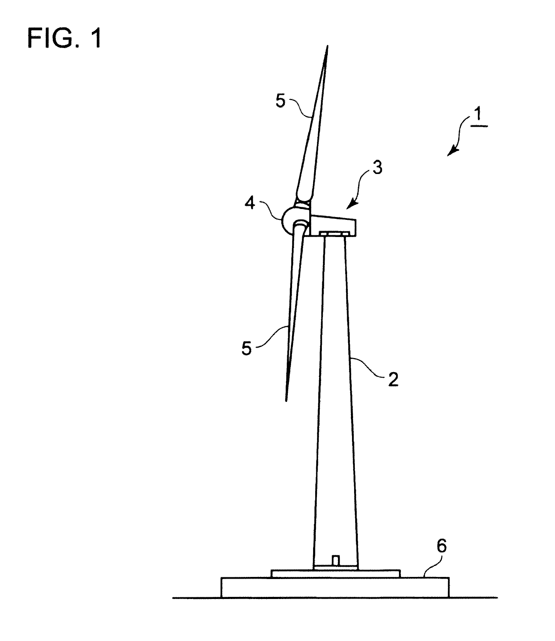

FIG.1 is a side view of a wind turbine generator 1 in relation to an embodiment of the present invention showing a structure thereof. The wind turbine generator 1 includes a tower 2 installed upright on a base 6, a nacelle installed atop the tower 2, a rotor heat mounted rotatably to the nacelle 3 and a blade 5 mounted to the rotor head 4. The rotor head 4 and the blade 5 constitute a wind turbine rotor.

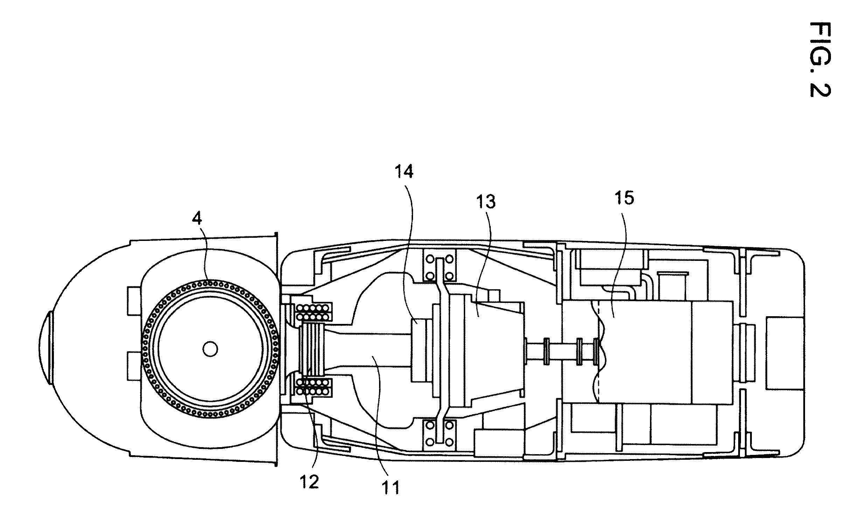

As shown in FIG.2, an end of a main shaft 11 is coupled to the rotor head 4 and the main shaft 11 is supported rotatably by a main shaft bearing 12. Other end of the main shaft 11 is coupled to an input shaft of a step-up gear by means of a shrink disc 14. An output shaft of the step-up gear is coupled to a rotor of the generator 15. When rotor head 4 is rotated by wind power, a rotation speed is increased by the step-up gear 13 and then transmitted to the rotor of the generator 15 to drive the generator 15. By this, the generator 15 generates power.

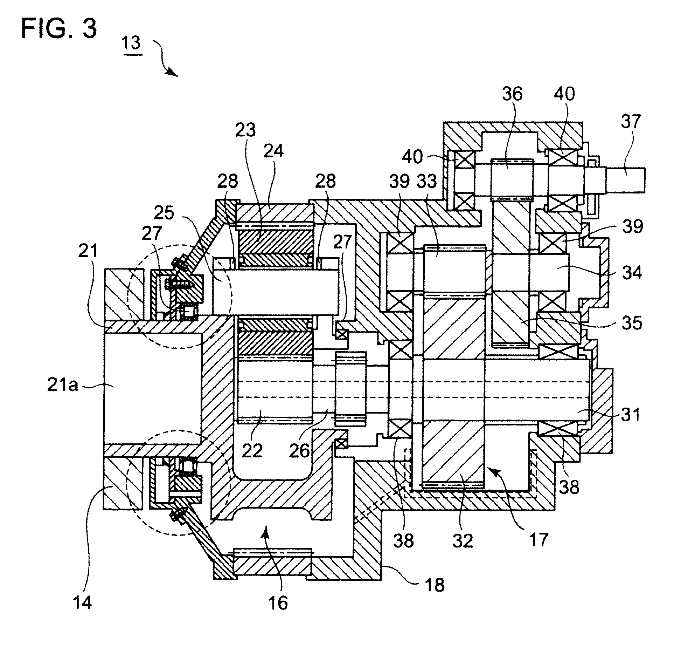

FIG.3 is a cross-sectional view of the structure of the step-up gear 13 in relation to the embodiment. The step-up gear 13 is provided with a planetary gear mechanism 16, a step-up gear mechanism 17 and a housing 18 which houses the mechanisms 16 and 17. The planetary gear mechanism 16 is provided with an input shaft 21, a sun gear 22, a plurality of planetary gears 23 (only one planetary gear is shown in the drawing), a plurality of planet pins 25 (only one planet pin is shown in the drawing) and a planetary output shaft 26. The input shaft 21 has an insert hole 21a for the main shaft 21. The main shaft 11 is coupled to the input shaft 21 by tightening the shrink disc 14 with the main shaft 11 being inserted in the insert hole 21a. The shrink disc 14 is an annular machine element whose inner periphery is shrinkable by a rotational drive force from outside. For instance, the shrink disc 14 may be tightened by a bolt provided in the shrink disk 14 or by hydraulic pressure. The shrink disc of the present invention has a press-fitting part for fitting the input shaft such as a screw in the inner periphery and the shrink disc is tightened via a tightening part such as a taper screw provided in an outer circumference of the input shaft so that the main shaft fitted in the input shaft and the input shaft are pressured and tightly fixed together by the shrink disc. The input shaft 21 is rotatably supported by a rolling bearing 27 provided in the housing 18. The input shaft 21 also functions as a carrier supporting the planetary gears 23 in the planetary gear mechanism 16. The planetary gears 23 are arranged between the sun gear 22 and the outer gear 24. The planetary gears 23 are connected to the main shaft 21 by the planet pins 25 inserted in the planetary gears 23. The planetary output shaft 26 is connected to the sun gear 22 and functions as an output shaft of the planetary gear mechanism 16. The rotation of the input shaft 21 is transmitted to the sun gear 22 via the planetary gears 23 and rotates the planetary output shaft 26 connected to the sun gear 22 at an increased speed.

The step-up gear mechanism 17 is provided with a first rotation shaft 31 connected to the planetary output shaft 26, a first spur gear 32 connected to the first rotation shaft 31, a second spur gear 33, a second rotation shaft 34 connected to the second spur gear 33, a third spur gear 35 connected to the second rotation shaft 34, a fourth spur gear 36 and an output shaft 37 connected to the fourth spur gear 36. The first rotation shaft 31, the second rotation shaft 34 and the output shaft 37 are respectively supported rotatably by bearings 38, 39 and 40 provided in the housing 18. The first spur gear 32 meshes with the second spur gear 33. The third spur gear 35 meshes with the fourth spur gear 36. In the step-up gear mechanism 17 having the above structure, the rotation of the planetary output shaft 26 is transmitted to the first spur gear 32, the second spur gear 33, the third spur gear 35 and the fourth spur gear 36, there by rotating the output shaft 37 connected to the fourth spur gear 36 at an increased speed. In the whole step-up gear 13, the rotation of the input shaft 21 is transmitted to the planetary gear mechanism 16 and then to step-up gear mechanism 17, thereby increasing the rotation speed and the increased speed is outputted via the output shaft 37.

In the planetary gear mechanism 16 of the embodiment, the planetary gear 23 is provided with a plain bearing. By means of the plain bearing, the planetary gear 23 is supported rotatably by the planet pin.
Although not shown in the drawing, the planet pin 25 has an oil path (oil hole) for supplying lubricant oil to the inner circumference of the planetary gear 23.
The plain bearing is useful to increase load that the bearing is bearable and also to increase the life of the bearing. However, it is necessary to supply enough lubricant oil to the bearing. To meet such requirement, in the step-up gear 14 of the embodiment, the forced lubrication system is adopted. In the embodiment, the lubricant oil is supplied to an inside of the housing by a pump not shown in the drawing. BY this, a sufficient amount of lubricant oil is supplied to the planetary gear mechanism 16 and the step-up gear mechanism 17.

In contrast, in the case of the forced lubrication system, from a perspective of improving maintainability, it is necessary to examine a seal structure between the input shaft 21 and the housing 18. In the embodiment, a seal structure as described below is used to improve the maintainability.

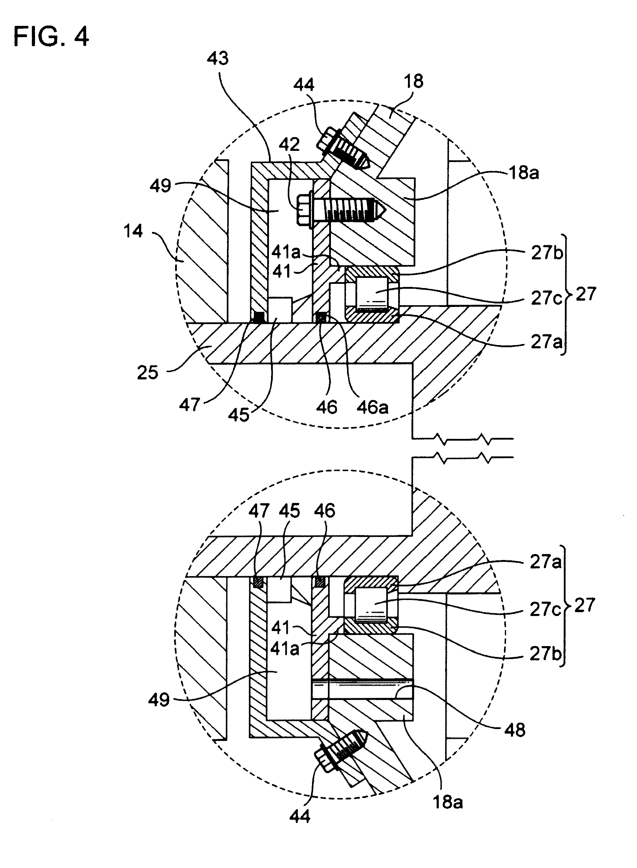

FIG.4 is a cross-sectional view of a seal structure between the input shaft 21 and the housing 18 in relation to the embodiment of the present invention. The housing 18 has an opening in which the rotation shaft 21 is inserted. Around the opening, a bearing support 18a is formed. The bearing support 18a is formed thicker than the rest of the housing 18. To the input shaft 21, an inner ring 27a of the rolling bearing 27 is inserted. To the bearing support 18a of the housing 18, an outer ring 27b of the rolling bearing 27 is fitted. Between the inner ring 27a and the outer ring 27b, a plurality of steel balls 27c are provided. The inner ring 27a, the outer ring 27b and the steel balls 27c constitute the rolling bearing 27. With this structure, the main shaft 21 is rotatably supported by the housing 18.

To the bearing support 18a of the housing 18, a holding plate 41 is fixed by means of a bolt 42. The holding plate 41 has a circular disk shape and has an opening in which the rotation shaft 21 is inserted in a center thereof. The holding plate 41 has a projection 41a of a ring shape, which pushes the outer ring 27b inward. Between the holding plate 41 and the rolling bearing 27, a circular space is formed. The lubricant oil is supplied to an upper part of the rolling bearing 27 (on the holding plate side) toward the outside of the housing 18, and the lubricant oil flows through the rolling bearing 27 and the circular space to a lower part of the rolling bearing 27, and then returns to the inside of the housing 18 (toward the planet pin 28).

In the inner periphery of the holding plate 41 which frictions against the input shaft 21, a ring-shaped groove 46a of a rectangular cross-section is formed. In the groove 46a, a flexible and lubricative filling is inserted. Specifically, a felt ring 46 is inserted in the groove 46a. The felt ring 46 functions as a seal to reduce leaking of the lubricant oil incompletely. The felt ring 46 also functions to maintain lubrication of a separable oil seal 45 by sealing a sliding surface (outer periphery) of the input shaft 25 and leaking the lubricant oil in the housing toward the oil seal 45 via the felt ring 46.

An outer surface of the holding plate 41 is covered by a cover which is separable into two parts so that the cover can be installed or removed freely even in a small space between the shrink disk 14 and the holding plate 41.
Specifically, a separable housing 43 functions as the separable cover, which can be halved, and an outer circumferential part thereof forms a taper surface along the housing 18. The separable housing 43 is fixed to the outer periphery of the housing 18 by screwing the taper surface to the outer periphery of the housing 18 by a bolt 44. In a closed circular space formed between the holding plate 41 and the separable housing 43, an oil seal 45 which is separable into two parts (may be separable into three or four parts) is housed. The separable oil seal 45 is a member which mainly provides a sealing function. The separable oil seal 45 seals the space between the holding plate and the input shaft 21. A closed space 49 is formed by the holding plate 41, the separable oil seal 45 and the input shaft 21. The lubricant oil is normally enclosed in the closed space 49.

The separable housing 43 and the separable oil seal 45 are configured separable into a plurality of parts (two parts in the embodiment) in the circumferential direction of the input shaft 21. As described later, the separable structure of the separable housing 43 and the separable oil seal 45 is effective in enhancing the maintainability.

On a surface of the separable housing 43, which frictions against the input shaft 21, a groove 47a is formed. In the groove 47a, a flexible and lubricative filling is inserted. Specifically, a felt ring 47 is inserted in the groove 47a. The felt ring 47 functions to preliminarily prevent leaking of the lubricant oil from the separable oil seal 45. Even when there is some malfunction or failure and the lubricant oil leaks from the oil seal, the lubricant is prevented from leaking outside of the step-up gear by proving the felt ring 47.

In the holding plate 41 and the housing 18, an oil discharge pathway 48 is formed so that a bottom part of the closed space between the holding plate 41 and the separable housing 42 communicates with a space inside the housing 18. The closed space 49 between the holding plate 41 and the separable housing 42 stores the lubricant oil having leaked from the separable oil seal 45 and the oil discharge pathway has a function to return the stored lubricant oil to the inside of the housing 18.

In the seal structure of the embodiment, the separable oil seal functions as a main component to prevent the lubricant oil from leaking and the felt ring 46 functions as a secondary component to prevent the leaking of the lubricant oil secondarily. When performing maintenance such as replacing the separable oil seal 45, the double seal structure successfully prevents foreign objects from entering the housing 18 while reducing the leaking of the lubricant oil. Specifically, the separable oil seal 45 can be replaced in the following order while preventing the foreign objects from entering the housing 18. First, the bolt 44 is removed and the old separable housing 43 is removed. Second, the oil seal 45 is removed. Third, a new separable oil seal 45 is installed. Finally, the separable housing 43 is installed. During the process, even when the separable oil seal 45 is removed, an opening of the housing 18 is closed by the holding plate 41 in which the felt ring 46 is provided. Thus, the foreign objects are kept from entering the housing 18 and the leaking of the lubricant oil is minimized.

The holding plate 41 functions to keep the opening of the housing 18 closed when replacing the separable oil seal 45 and also to suppress the flow rate of the lubricant oil entering the separable oil seal 45. The increased flow rate of the lubricant oil supplied to the step-up gear 13 to improve lubricating efficiency and cooling efficiency, may lead to increased flow rate of the lubricant oil entering the rolling bearing 27. The holding plate 41 controls the flow rate of the lubricant oil flowing into the separable oil seal 45 even at the increased flow rate of the lubricant flowing into the rolling bearing 27. Therefore, it is possible to improve the reliability of the separable oil seal 45.

Herein, the separable housing 43 and the separable oil seal 45 are configured separable and thus, the operation space for replacing the separable oil seal can be reduced. This is particularly helpful in the case where the shrink disk 14 is arranged near the housing 18. In the embodiment, the shrink disk 14 is arranged facing the separable housing 43 and the shrink disk 14 may interfere with the replacement of the separable oil seal 45. However, in the embodiment, the housing 43 is configured separable and can be removed in the radial direction of the input shaft 21. In the similar manner, the separable oil seal 45 is configured separable and can be removed in the radial direction of the input shaft 21. In the embodiment, with the structure in which the separable housing 43 and the separable oil seal 45 can be removed in the radial direction of the input shaft 21, even when the shrink disk 14 is arranged near the separable housing 43, the separable oil seal 45 can be easily replaced by removing the separable housing 43 and the separable oil seal 45.

As described above, in the seal structure of the embodiment, the separable oil seal functions as a main component to prevent the lubricant oil from leaking and the felt ring 46 functions as a secondary component to prevent the leaking of the lubricant oil secondarily. By this, the separable oil seal 45 can be replaced while preventing the foreign objects from entering the housing 18. The separable housing 43 and the separable oil seal 45 are configured separable and thus, the operation space for replacing the separable oil seal can be reduced.

The embodiment of the present invention has been described above in details. However, this is not limitative and it is possible to make a variety of modifications.

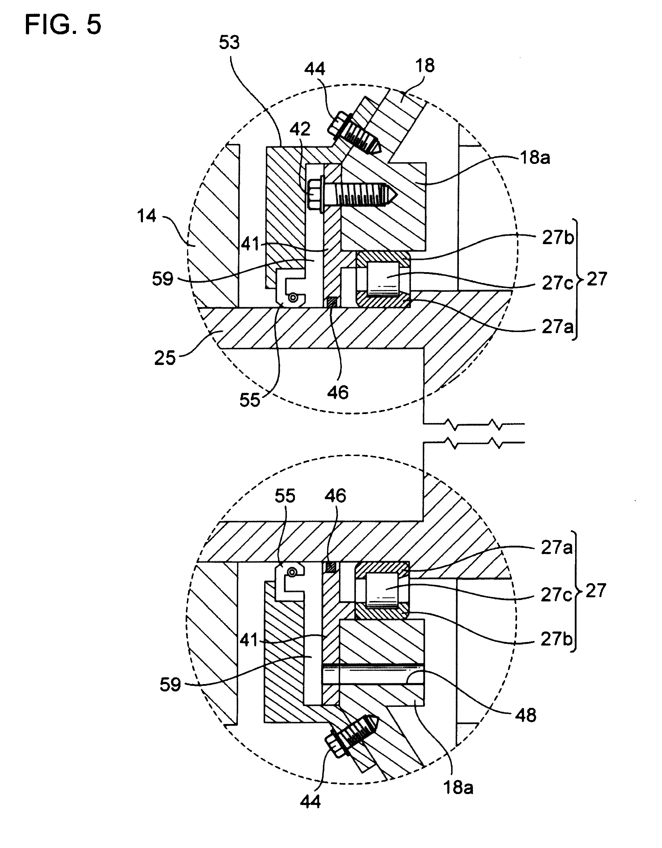

FIG.5 is a cross-sectional view of the step-up gear 13 in relation to a modified embodiment of the present invention. Specifically, another seal structure between the input shaft 21 and the housing 18 is shown in the drawing. In the seal structure of FIG.5, instead of the felt ring 47, a separable oil seal 55 is provided at an end of a separable housing 53. In the seal structure of FIG.4, the closed space 49 is formed by the holding plate 41, the separable oil seal 45 and the input shaft 21, whereas, in the seal structure of FIG.5, a closed space 59 is formed by the holding plate 41, the separable housing 53, the separable oil seal 55 and the input shaft 21. The separable oil seal 55 functions to seal between the separable housing 53 and the input shaft. The lubricant is kept in the closed space 59 by the separable oil seal 55 to prevent the lubricant oil from leaking. In the manner similar to the separable housing 43 and the separable oil seal 45, the separable housing 53 and the separable oil seal 55 are configured separable into a plurality of parts, e.g. two parts, in the circumferential direction of the input shaft 21. With this seal structure, the same effects as the seal structure of FIG.4 can be achieved.

In the above embodiment, the closed space 49 disposed between the holding plate and the shrink disk 14 tightening and connecting the input shaft and the main shaft is small in width. In particular, the separable oil seal 45, 55 is disposed on the outer periphery of the input shaft on the inner circumferential side of the separable housing and thus, when replacing and putting back the separable oil seal 45, 55 during the maintenance, it is difficult to position the separable oil seal 45, 55 in the axial direction of the oil seal. In addition to that, the circular shrink disc 14 of large size is disposed near the oil seal and the shrink disc 14 interferes with the installing the oil seal 45 and thus, it is difficult to place the oil seal 45 in a correct position.
Especially, in the structure where there is no felt ring 47 outside the oil seal 55 as shown in FIG.5, a small amount of the lubricant oil leaks from the input shaft, which can be prevented in the structure where the felt ring 47 is provided.
Further, the oil seal 55 is fixed directly to the separable housing 53 and thus, it may be difficult to perform centering when performing the maintenance of the oil seal.

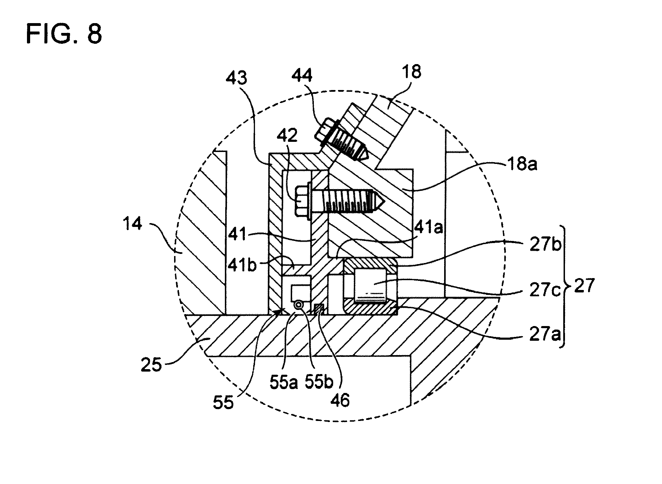

FIG.8 is a cross-sectional view of a seal structure between the input shaft 21 and the housing 18 in relation to yet another embodiment of the present invention in an attempt to solve the above issue.
In the embodiment, the housing 18 has a circular opening on the center axis thereof. In the circular opening, the input shaft 21 is inserted. Around the opening, the bearing support 18a is formed. The bearing support 18a is formed thicker than the rest of the housing 18. Between the input shaft 21 and the bearing support 18a, the rolling bearing 27 constituted of the inner ring 27a, the outer ring 27b and the steel balls 27c, is inserted. With this structure, the input shaft 21 is rotatably supported by the housing 18.

On a surface of the bearing support 18a of the housing 18, which faces the shrink disk 14, the holding plate 41 of a circular disk shape having the opening for the input shaft 21 in the center is arranged. The holding plate 41 is fixed to the housing 18 by a plurality of bolts 42 disposed in the circumferential direction.
On both front and rear surfaces of the holding plate 41, a first projection 41b and a second projection 41a are centrically formed such as to project in a shape of a circular ring toward the separable housing 43 and toward the rolling bearing 27 respectively.
The second projection 41a pushes the outer ring 27b of the rolling bearing 27 inward, thereby forming a circular space between the holding plate 41 and the rolling bearing 27.
The first projection 41b is ring-shaped and has an outer diameter smaller than that of the second projection 41a. The first projection 41b extends to a position that comes in contact with an inner wall surface of the separable housing 43. As a result, a circular oil seal housing space 490 is formed by the inner wall surface of the separable housing 43, the inner periphery of the first projection 41b and an outer wall surface of the holding plate.
In the embodiment, the oil seal has a separable structure into two semicircular parts. Specifically, the oil seal 55 is formed into a C-shape in cross section and provided with a seal lip 55a on an inner circumferential side being in contact with the input shaft and a spring 55b behind the seal lip 55a. The inner diameter of the first projection 41b is set the same or slightly greater than the outer diameter of the oil seal 55 and the separable oil seal 55 that is separable into two semicircular parts is placed in the circular oil seal housing space 490 so that the separable oil seal 55 can be aligned without falling down.

The rest of the structure is substantially the same as the one shown in FIG.4. Basically, the separable housing 43 is separable into two parts and has the outer circumferential part that tapers along the outer periphery of the housing 18. The separable housing 43 is fixed to the outer periphery of the housing 18 by screwing the taper surface to the outer periphery of the housing 18 by the bolt 44. In the inner periphery of the holding plate 41 which frictions against the input shaft 21, the ring-shaped groove 46a of a rectangular cross-section is formed. In the groove 46a, the felt ring 46 is inserted. The felt ring 46 allows the lubricant oil stored in the housing 18 to leak toward the oil seal 45 via the felt ring 46, thereby maintaining lubrication of the separable oil seal 45 in the circular oil seal housing space 490.

In this embodiment, the separable housing 43 is provided only with the oil seal 45, instead of the oil seal 45 and the felt ring 47. This is because the separable oil seal 45 is housed at a proper position in the circular oil seal housing space 490 without falling and the lubricant oil does not leak from the oil separable oil seal 45. The oil seal 45 alone can prevent the lubricant oil from leaking outside the step-up gear 13.

In the seal structure of this embodiment, the first projection 41b extends in a ring shape from the outer wall surface of the holding plate 41 to the position where the tip thereof comes in contact with the inner wall surface of the separable housing, and the inner wall surface of the separable housing 43, the inner periphery of the first projection 41b and the outer wall surface of the holding plate 41 form the circular oil seal housing space 490 having a rectangular shape in cross section. By placing the oil seal in the housing space 490, it is easy to align the oil seal and to improve sealing capability of the oil seal while preventing the oil seal from falling.

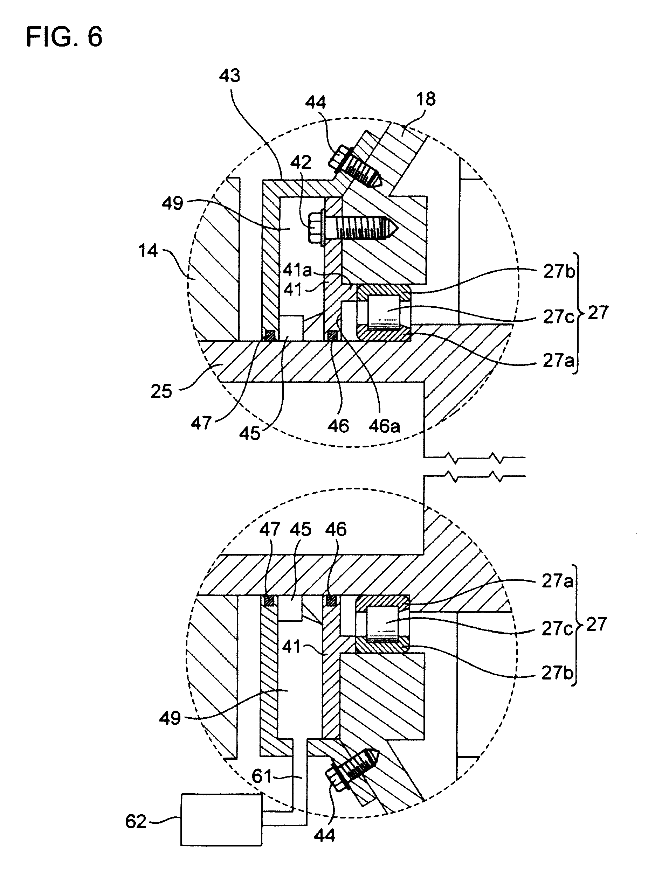

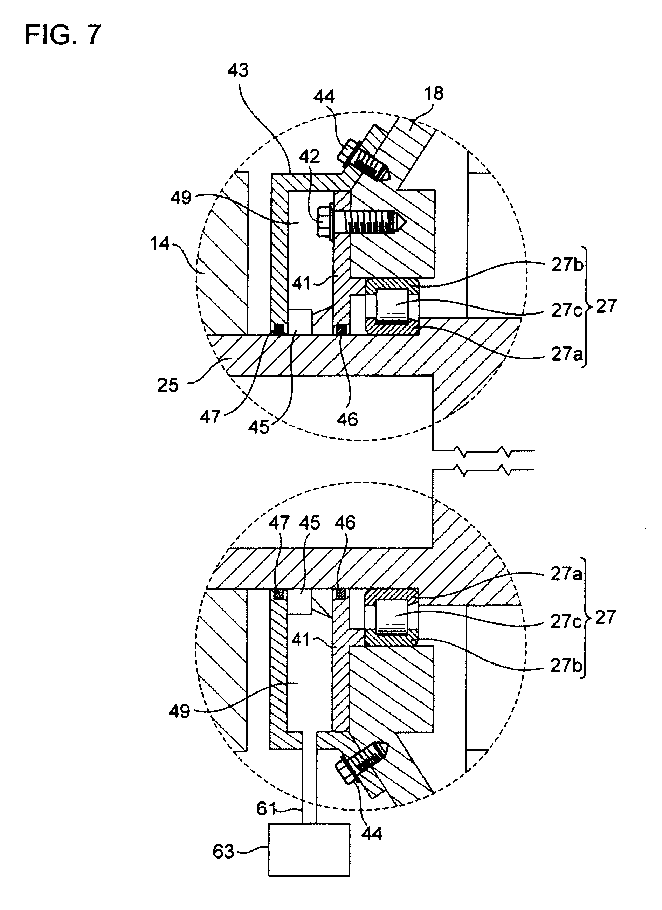

In the seal structure illustrated in FIG.4 and FIG.5, the oil discharge pathway 48 is arranged such that the housing 18 communicates with the closed space 49, 59. However, it is also possible to provide an oil discharge pipe 61, instead of the oil discharge pathway 48, such that the closed space 49 (or 59) communicates with a pump 62 and the lubricant oil stored in the closed space 49 (or 59) is returned to the inside of the housing 18 by the pump 62 as shown in FIG.6.
The oil discharge pipe 61 may be connected to a tank 63 as shown in FIG.7. In such case, the lubricant oil stored in the closed space 49 (or 59) is then stored in the tank 63.

In the seal structures shown in FIG.4, FIG.5 and FIG.8, the separable housing 43, 53 is connected to the housing 18. However, this is not limitative and the separable housing 43, 53 may be connected to the holding plate 41 instead of the housing 18. In such case, the separable housing 43, 53 is arranged such as to cover the periphery of the holding plate 41 where the input shaft is inserted.

## Claims

1. A seal structure of a mechanical device, comprising:
a housing which has an opening in which a rotation shaft is inserted and in which lubricant oil is used;
a holding plate which is connected to a periphery of the opening of the housing and which has an opening in which the rotation shaft is inserted;
a first seal member which is provided in the holding plate and which seals a space between the holding plate and the rotation shaft;
a cover which is provided to cover a periphery of at least a portion of the holding plate where the rotation shaft is inserted; and
a second seal member which seals one of the space between the holding plate and the rotation shaft and a space between the cover and the rotation shaft.

2. The seal structure of the mechanical device according to claim 1,
wherein the cover is configured separable in a circumferential direction of the rotation shaft.

3. The seal structure of the mechanical device according to claim 1 or 2,
wherein the second seal member is configured separable in a circumferential direction of the rotation shaft.

4. The seal structure of the mechanical device,
wherein the holding plate has a projection of arc-shape which extends to a position where the projection comes in contact with a wall surface of the cover, and
wherein a second-seal housing space for housing the second seal member is formed by the wall surface of the cover, an inner periphery of the projection of the arc-shape and a wall surface of the holding plate.

5. The seal structure of the mechanical device according to any one of claims 1 to 4, further comprising:
a communication path through which a space between the cover and the holding plate communicates with an inside of the housing.

6. The seal structure of the mechanical device according to any one of claims 1 to 4, further comprising:
a tank; and
a pump which returns the lubricant oil stored in a space between the cover and the holding plate to an inside of the housing.

7. The seal structure of the mechanical device according to any one of claims 1 to 4, further comprising:
a tank; and
a pipe through which a space between the cover and the holding plate communicates with the tank.

8. The seal structure of the mechanical device according to any one of claims 1 to 7,
wherein the second seal member seals the space between the holding plate and the rotation shaft, and
wherein the seal structure further comprises a third seal member which
is provided in the cover to seal a space between the cover and a rotation shaft.

9. The seal structure of the mechanical device according to any one of claims 1 to 8, wherein the first seal member is a felt ring.

10. A wind turbine generator, comprising:
a main shaft which supports a wind turbine rotor and is arranged rotatably;
a step-up gear which has an input shaft and an output shaft, the input shaft having a hole in which the main shaft is inserted;
a shrink disc which connects the input shaft and the main shaft together by tightening the input shaft; and
a generator which is connected to the output shaft of the step-up gear,
wherein the step-up gear comprises:
a housing having an opening in which the input shaft is inserted and in which a lubricant oil is used;
a holding plate which is connected to a periphery of the opening of the housing and which has an opening in which the input shaft is inserted;
a first seal member which is provided in the holding plate and which seals a space between the holding plate and the input shaft;
a cover which is provided to cover a periphery of at least a portion of the holding plate where the input shaft is inserted; and
a second seal member which seals one of the space between the holding plate and the input shaft and a space between the cover and the input shaft.

11. The wind turbine generator according to claim 10,
wherein the shrink disc is arranged such as to face the cover,
wherein the cover is configured separable in a circumferential direction of the input shaft.

12. The wind turbine generator according to claim 10 or 11,
wherein the second seal member is configured separable in a circumferential direction of the input shaft.

13. The wind turbine generator according to claim 10,
wherein the step-up gear comprises a seal structure for the lubricant oil which is arranged along the input shaft between: the housing having the opening in which the input shaft is inserted and in which the lubricant oil is used; and the shrink disc connecting the input shaft and the main shaft together by tightening the input shaft, and
wherein the seal structure comprises:
the holding plate which is connected to the periphery of the opening of the housing and which has the opening in which the input shaft is inserted;
the first seal member which is provided in the holding plate and which seals the space between the holding plate and the input shaft;
the cover which is provided to cover the periphery of the at least portion of the holding plate where the input shaft is inserted; and
the second seal member which seals one of the space between the holding plate and the input shaft and the space between the cover and the input shaft.

14. The wind turbine generator according to claim 13,
wherein the holding plate has a projection of arc-shape which extends to a position where the projection comes in contact with a wall surface of the cover, and
wherein a second-seal housing space for housing the second seal member is formed by the wall surface of the cover, an inner periphery of the projection of the arc-shape and a wall surface of the holding plate.
